## Europäisches Patentamt

## European Patent Office

## Office européen des brevets

(19)

(11) Publication number: **0 064 065**
**B1**

# EUROPEAN PATENT SPECIFICATION

(12)

(45) Date of publication of patent specification: **08.08.84**

(51) Int. Cl.³: **B 01 D 15/08,**
**G 01 N 31/08**

(21) Application number: **81902988.5**

(22) Date of filing: **03.11.81**

(86) International application number:
**PCT/FI81/00080**

(87) International publication number:
**WO 82/01662 27.05.82 Gazette 82/14**

(54) **A GAS CHROMATOGRAPH OVEN.**

(30) Priority: **10.11.80 FI 803502**

(43) Date of publication of application:
**10.11.82 Bulletin 82/45**

(45) Publication of the grant of the patent:
**08.08.84 Bulletin 84/32**

(84) Designated Contracting States:
**DE FR GB NL**

(56) References cited:
**DE - A - 1 673 285**
**DE - A - 2 645 841**
**DE - B - 1 181 448**
**GB - A - 1 200 415**

(73) Proprietor: **Orion-yhtymä Oy**
**Nilsiänkatu 10-14**
**SF-00510 Helsinki 51 (FI)**

(72) Inventor: **NORONEN, Aatto**
**Ristiaallokonkatu 6 F 80**
**SF-02320 Espoo 32 (FI)**
Inventor: **SARESKIVI, Henrik**
**Oskelantie 8 C 28**
**SF-00320 Helsinki 32 (FI)**
Inventor: **KUMLIN, Klaus**
**Kaskilaaksontie 5 A**
**SF-02360 Espoo 36 (FI)**

(74) Representative: **Carpmael, John William Maurice**
**et al,**
**CARPMAELS & RANSFORD 43 Bloomsbury**
**Square**
**London, WC1A 2RA (GB)**

Courier Press, Leamington Spa, England.

**Description**

This invention relates to a gas chromatograph oven, in which recirculation of air inside the oven as well as partial and complete exchange of air from outside of the oven occurs.

Hitherto known air circulation systems consist of, for example, opening the oven cover and allowing air to flow out and, at the same time, ambient air to flow into and through the oven, when it is cooled, and when the oven is warmed up, air is recirculated inside the oven using different recirculation methods. Such air circulation systems circulate it through the oven and remove it from the oven using another separate channel. However, a drawback of the mentioned solutions is the more or less uncontrollable circulation; the air is not directed to flow so that its effect would be the best possible. Another drawback is the complexity of the apparatus used in those cases where the air is taken from outside of the oven.

An example of a known type of air circulation system is shown in DE—A—26 45 841 (Block Engineering Inc.). This system comprises a chamber in which are located a reference and a sample gas chromatography column. The chamber is divided into an upper and lower section by a dividing wall having in it a number of holes for allowing gas circulation. A square section air tube is pivotally attached to one wall of the chamber. The tube can only occupy one of two positions and is movable between these positions by a solenoid. In the first position cold air is drawn into the chamber through the tube and heated by an electric element. In the second position hot air is expelled from the chamber through the tube. The gas chromatography system is designed so that it can be used in combination "on line" with, for instance, an infrared spectrometer.

The object of this invention is to avoid the troublesome drawbacks in the art and achieve an effective, controllable, and at the same time simple and economical system for recirculating air in a gas chromatograph oven.

According to the present invention there is provided a gas chromatograph oven comprising:

a fan (2) for circulating air;

a heating resistor (9) for heating the air in the oven;

a sensor (14) for controlling the air temperature in the oven;

an inlet channel (7) for allowing entry of air into the oven from outside;

an outlet channel (6) for allowing discharge of air to the outside from the oven;

the inlet (7) and outlet (6) channels being located side by side;

a wall (13) spaced from and transverse to the inlet (7) and outlet (6) channels, defining an internal circulation channel (5); and

one and only one shutter (8) movable steplessly to any position (B) between a first position (A), wherein both the inlet (7) and outlet (6) channels are fully closed and the internal circulation channel (5) is fully open, and a second position (C), wherein both the inlet (7) and outlet (6) channels are fully open and the internal circulation channel (5) is fully closed, whereby the proportion of the air circulating to the outside of the oven is continuously variable.

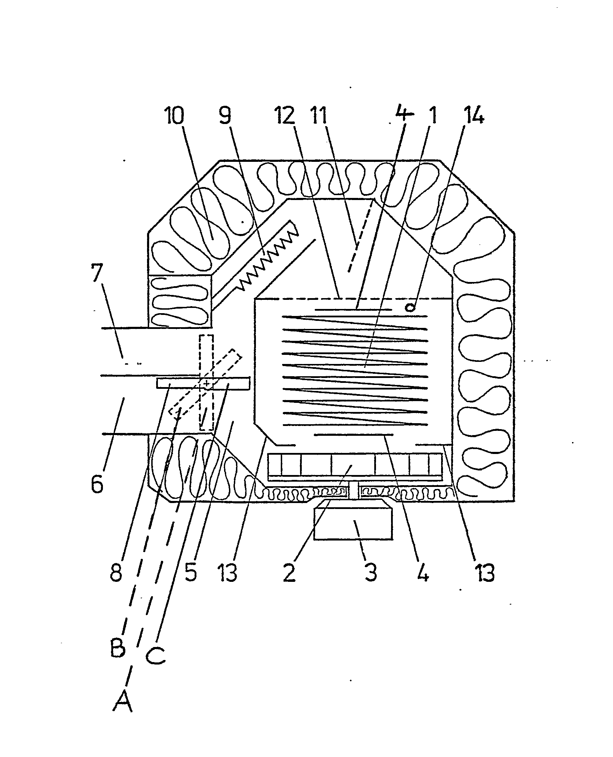

In the present invention the circulation of air is arranged to occur either completely inside the oven or either partially or completely to the outside from the oven by regulating the circulation with one and only one shutter so that the shutter either closes the inlet and outlet channels completely, so that the internal circulation channel is completely open, or the shutter opens the inlet and outlet channels partially or completely so that the internal circulation channel is correspondingly partially or completely closed. The invention is described more specifically in the following text with reference to the attached Figure.

A wound column 1 is located in an oven, which is surrounded by insulation 10. A fan 2 driven by motor 3 causes air to circulate in the oven. Guide plates 4 are advantageously attached to the column frame. An inlet 7 and outlet 6 channel connect the interior of the oven to the outside. A wall 13, spaced from and transverse to the inlet 7 and outlet 6 channels, defines an internal circulation channel 5. A perforated plate 11, guide plates 4 and a net 12 play an important part is directing the air and smoothing its flow. Further essential parts of the gas chromatograph oven are the sensor 14, for example, a thermoelement which is used to regulate oven temperature, and a shutter 8 which is the core of the air circulation's regulation.

The gas chromatograph oven functions as follows: When the oven temperature needs to be raised, shutter 8 is placed into position A, at which time the fan 2, for example a rotary fan, circulates air through the internal circulation channel 5 past a heating resistor 9, so that the air warms up while passing over the functioning heating resistor 9. The flow is directed with the help of perforated plate 11 and smoothed with the help of net 12, as well as directed to flow along the wound column 1 and not through its center, with the help of guide plates 4 which are located at the ends of the wound column 1. The sensor 14 measures the temperature and adjusts the heating power to achieve the desired temperature. If it is desired to mix some cooler air from outside the oven into the circulation, shutter 8 is opened to, for example, position B, whereby a portion of the air is removed through outlet channel 6 and a corresponding amount of air from outside the oven comes into the air circulation inside the oven through inlet channel 7. If the oven needs to be ventilated thoroughly as is usual at the end of the runs, the shutter is turned to position C, whereby all of the circulating air comes from outside of the oven. If necessary, shutter 8 can be even manually turned without steps, but automatic control is also very easily arranged, for example with an electric motor. In such a case where the oven temperature needs to be below room temperature, an appropriate cooling agent can be fed through inlet channel 7.

The complete regulation of the air circulation as mentioned above can thus be accomplished by use of one and only one shutter 8. Warming and cooling form an entirety whose essential parts are the shutter 8, the healthy resistor 9, and the sensor 14. The functioning of the mentioned parts can easily be altered to occur completely automatically.

### Claims

1. A gas chromatograph oven comprising:
a fan (2) for circulating air;
a heating resistor (9) for heating the air in the oven;
a sensor (14) for controlling the air temperature in the oven;
an inlet channel (7) for allowing entry of air into the oven from the outside;
an outlet channel (6) for allowing discharge of air to the outside from the oven;
the inlet (7) and outlet (6) channels being located side by side;
a wall (13) spaced from and transverse to the inlet (7) and outlet (6) channels, defining an internal circulation channel (5); and
one and only one shutter (8) movable steplessly to any position (B) between a first position (A), wherein both the inlet (7) and outlet (6) channels are fully closed and the internal circulation channel (5) is fully open, and a second position (C), wherein both the inlet (7) and outlet (6) channels are fully open and the internal circulation channel (5) is fully closed.

2. A gas chromatograph oven according to claim 1, wherein the heating resistor (9) is located in the internal circulation channel (5).

3. A gas chromatograph oven according to claim 1 or claim 2, further comprising a perforated plate (11), guide plates (4) and net (12) for smoothing the flow and for accomplishing an appropriate air flow.

### Revendications

1. Four de chromatographe en phase gazeuse comprenant:
un ventilateur (2) de circulation d'air;
une résistance chauffante (9) de chauffage de l'air présent dans le four;
un détecteur (14) de réglage de la température d'air régnant dans le four;
un conduit d'entrée (7) pour permettre l'admission d'air dans le four à partir de l'extérieur;

un conduit de sortie (6) pour permettre l'évacuation d'air à l'extérieur à partir du four;
les conduits d'entrée (7) et de sortie (6) étant situés côte à côte;
une paroi (13) espacée et transversale par rapport aux conduits d'entrée (7) et de sortie (6), définissant un chenal de circulation interne (5); et
un seul et unique opercule (8) pouvant se déplacer de façon progressive pour atteindre toute position (B) située entre une première position (A), dans laquelle les conduits tant d'entrée (7) que de sortie (6) sont complètement fermées et le conduit de circulation interne (5) est complètement ouvert, et une second position (C), dans laquelle les conduits tant d'entrée (7) que de sortie (6) sont complètement ouverts et le conduit de circulation interne (5) est complétement fermé.

2. Four de chromatographe en phase gazeuse selon la revendication 1, caractérisé en ce que la résistance chauffante (9) est située dans le conduit de circulation interne (5).

3. Four de chromatographe en phase gazeuse selon la revendication 1 ou 2, caractérisé en ce qu'il comprend encore une plaque perforée (11), des plaques de guidage (4) et un treillis (12) pour régulariser l'écoulement et pour établir un écoulement d'air approprié.

### Patentansprüche

1. Gaschromatographieofen mit einem Gebläse (2) für die Zirkulation von Luft;
einem Heizwiderstand (9) zum Erwärmen der Luft in dem Ofen;
einem Meßfühler (14) zur Regulierung der Lufttemperatur in dem Ofen;
einem Einlaßkanal (7), durch welchen Luft von außerhalb des Ofens in den Ofen eintreten kann;
einem Auslaßkanal (6), durch welchen Luft von dem Ofen nach außen abgegeben werden kann;
wobei der Einlaßkanal (7) und der Auslaßkanal (6) nebeneinander angeordnet sind;
einer Wand (13), die im Abstand von und quer zu dem Einlaßkanal (7) und dem Auslaßkanal (6) angeordnet ist und einen inneren Zirkulationskanal (5) begrenzt; und
mit nur einer Verschlußklappe (8), die stufenlos in irgendeine Position (B) zwischen einer ersten Position (A), in welcher sowohl der Einlaßkanal (7) als auch der Auslaßkanal (6) vollständig geschlossen und der innere Zirkulationskanal (5) vollständig geöffnet sind, und einer zweiten Position (C) bewegbar ist, in welcher sowohl der Einlaßkanal (7) als auch der Auslaßkanal (6) vollständig geöffnet und der innere Zirkulationskanal (5) vollständig geschlossen sind.

2. Gaschromatographieofen nach Anspruch 1, dadurch gekennzeichnet, daß der Heizwiderstand (9) in dem inneren Zirkulationskanal (5) angeordnet ist.

3. Gaschromatographieofen nach Anspruch 1 oder 2, dadurch gekennzeichnet, daß eine perforierte Platte (11), Leitplatten (4) und ein Netz (12) vorgesehen sind zum Glätten und zur Ausbildung eines geeigneten Luftstromes.